# DEMANDE DE BREVET EUROPEEN

(11) **EP 1 298 385 A1**
(43) Date de publication de la demande: **02.04.2003**
(21) Numéro de dépôt: 02292263.7
(22) Date de dépôt: 16.09.2002
(51) Int. Cl.: F21V 5/00, F21V 7/00, B60Q 1/00, F21S 8/10

(54) **Projecteur d'éclairage elliptique comportant un système optique secondaire**

(30) Priorité: 27.09.2001 FR 0112560
(71) Demandeur: VALEO VISION, 93012 Bobigny Cédex (FR)
(72) Inventeur: Albou, Pierre, 75013 Paris (FR)

(57) **Abrégé**

L'invention propose un projecteur d'éclairage (10) de véhicule automobile, du type comportant un système optique principal (23) qui comprend, agencés d'arrière en avant globalement suivant un axe optique principal (A-A), une source lumineuse principale (16), un réflecteur principal (14) du type elliptique, et une lentille principale convergente (18),
caractérisé en ce qu'il comporte un système optique secondaire (36) comprenant :
- une source lumineuse secondaire (48) qui est agencée à l'arrière de la lentille principale (18) et en dehors du trajet des rayons lumineux émis par la source lumineuse principale (16) ;
- et, un élément optique de répartition (42) qui est intercalé entre la source lumineuse secondaire (48) et la surface de sortie (19) de la lentille principale (18), de manière à réaliser à la sortie de la lentille principale (18) un faisceau réglementaire secondaire de signalisation.

## Description

La présente invention concerne un projecteur d'éclairage de véhicule automobile.

La présente invention concerne plus particulièrement un projecteur d'éclairage de véhicule automobile qui est prévu pour réaliser au moins un faisceau d'éclairage réglementaire, notamment du type feu de route ou du type feu de croisement, du type comportant un système optique principal qui comprend, agencés d'arrière en avant globalement suivant un axe optique principal, une source lumineuse principale, un réflecteur principal du type elliptique dont un premier foyer est situé au voisinage de la source, et une lentille principale convergente dont un plan focal passe au voisinage d'un second foyer du réflecteur principal.

Dans les projecteurs de véhicule automobile qui comportent au moins une source lumineuse principale agencée à l'intérieur d'un réflecteur de forme globalement parabolique ou d'un réflecteur du type à surface complexe, il est connu d'agencer une source lumineuse secondaire dans une zone de la paroi réfléchissante du réflecteur qui n'est pas essentielle à la réalisation du faisceau d'éclairage réglementaire associé au projecteur. Cette source secondaire permet de réaliser un faisceau de signalisation réglementaire du type feu de position.

Selon la réglementation en vigueur, le faisceau de signalisation réglementaire de feu de position, aussi appelé lanterne ou veilleuse, doit éclairer globalement dans toutes les directions situées à l'avant du projecteur avec une intensité lumineuse relativement faible par rapport à un faisceau d'éclairage principal tel qu'un feu de croisement ou un feu de route.

Cependant, l'agencement d'une source lumineuse secondaire dans une paroi réfléchissante d'un réflecteur principal n'est pas envisageable pour un projecteur équipé d'un réflecteur du type elliptique et d'une lentille.

En effet, comme la source lumineuse principale est agencée au foyer de l'ellipse formée par le réflecteur, alors la source lumineuse secondaire doit obligatoirement être agencée dans une zone très « défocalisée » et très décalée radialement par rapport à l'axe optique principal.

Par conséquent, le faisceau lumineux produit par la source secondaire en sortie de la lentille est orienté principalement dans une seule direction très inclinée par rapport à l'axe optique. L'intensité lumineuse n'est donc pas suffisante dans les autres directions, notamment dans la direction axiale, pour remplir les exigences réglementaires associées à un faisceau de feu de position.

De plus, les projecteurs à réflecteur elliptique comportent généralement un dispositif d'occultation partielle ou cache, qui est intercalé axialement entre le réflecteur et la lentille, en vue d'occulter une partie des rayons lumineux émis par la source lumineuse principale, de manière à réaliser le faisceau d'éclairage réglementaire correspondant.

Dans le cas d'un projecteur réalisant un feu de croisement, le cache est prévu pour occulter en majorité les rayons lumineux qui seraient dirigés vers le haut à la sortie du système optique. Le cache est donc agencé devant la moitié inférieure de l'ouverture de sortie du réflecteur elliptique.

Dans ce cas, seule la zone de la paroi réfléchissante du réflecteur elliptique qui est située en bas, derrière le cache, n'est pas essentielle à la réalisation de la fonction principale et peut donc recevoir une source lumineuse secondaire.

Les rayons lumineux émis par la source secondaire subissent alors le même effet d'occultation que la source principale. Le faisceau lumineux en sortie de lentille n'est donc pas correctement réparti dans toutes les directions, ce qui ne lui permet pas de satisfaire les exigences réglementaires.

Généralement, lorsque les projecteurs principaux sont du type à réflecteur elliptique, il est alors nécessaire d'agencer la source lumineuse secondaire en dehors des projecteurs principaux, ce qui est pénalisant notamment en termes de coûts et d'encombrement.

D'autre part, la réglementation de certains pays prévoit d'obliger les constructeurs automobiles à équiper leurs véhicules de projecteurs qui réalisent un faisceau de signalisation spécifique, appelé « Day Running Light » ou « feu de jour », et qui sont prévus pour être allumés en permanence lors de la circulation de jour.

Actuellement, cette nouvelle fonction de signalisation nécessite la réalisation d'un projecteur spécifique dédié à produire ce faisceau d'éclairage réglementaire de feu de jour.

Il existe donc un besoin pour la conception d'un projecteur permettant de réaliser, en plus d'au moins une fonction principale telle qu'une fonction de feu de croisement ou de feu de route, une fonction secondaire de signalisation telle qu'une fonction de feu de position ou de feu de jour.

L'invention vise à remédier aux inconvénients mentionnés ci-dessus en proposant un projecteur d'éclairage du type elliptique qui soit simple et économique, et qui permette de réaliser un faisceau de signalisation, en plus d'au moins une fonction d'éclairage principale telle qu'un feu de croisement ou un feu de route.

Dans ce but, l'invention propose un projecteur d'éclairage de véhicule automobile qui est prévu pour réaliser au moins un faisceau d'éclairage réglementaire, notamment du type feu de route ou du type feu de croisement, du type comportant un système optique principal qui comprend, agencés d'arrière en avant globalement suivant un axe optique principal, une source lumineuse principale, un réflecteur principal du type elliptique dont un premier foyer est situé au voisinage de la source, et une lentille principale convergente dont un plan focal passe au voisinage d'un second foyer du réflecteur principal, caractérisé en ce qu'il comporte un système optique secondaire comprenant :
- une source lumineuse secondaire qui est agencée à l'arrière de la lentille principale et en dehors du trajet des rayons lumineux émis par la source lumineuse principale ;
- et, un élément optique de répartition qui est intercalé entre la source lumineuse secondaire et la surface de sortie de la lentille principale, qui reçoit les rayons lumineux émis par la source secondaire sur sa surface d'entrée et qui les répartit sur sa surface de sortie, de manière à réaliser à la sortie de la lentille principale un faisceau réglementaire secondaire de signalisation, notamment du type feu de position ou du type feu de jour.

Selon d'autres caractéristiques de l'invention :
- la surface de sortie de l'élément optique de répartition est adjacente à une portion de la surface d'entrée de la lentille principale ;
- l'élément optique de répartition est formé dans une portion périphérique de la lentille principale ;
- l'élément optique de répartition est une lentille secondaire ;
- la source lumineuse secondaire et l'élément optique de répartition sont globalement alignés suivant un axe optique secondaire qui est sensiblement parallèle à l'axe optique principal ;
- le système optique secondaire comporte des moyens prévus pour concentrer les rayons lumineux émis par la source secondaire sur la surface d'entrée de l'élément optique de répartition ;
- la source lumineuse secondaire est agencée à l'intérieur d'un réflecteur secondaire de forme globalement parabolique ou elliptique ;
- la structure du réflecteur secondaire est réalisée par moulage en une seule pièce avec la structure du réflecteur principal.

D'autres caractéristiques et avantages de l'invention apparaîtront à la lecture de la description détaillée qui suit pour la compréhension de laquelle on se reportera aux dessins annexés parmi lesquels :
- la figure 1 est une vue en coupe axiale qui représente schématiquement un projecteur de feu de route du type elliptique équipé d'un système optique secondaire conforme aux enseignements de l'invention ;
- la figure 2 est une vue en perspective qui représente schématiquement le système optique secondaire de la figure 1 ;
- la figure 3 est une vue similaire à celle de la figure 1 qui représente une variante de réalisation de l'invention dans laquelle une lentille secondaire est formée dans une portion de la lentille principale.

Préliminairement, on notera que d'une figure à l'autre les éléments identiques ou similaires sont référencés dans la mesure du possible par les mêmes signes de référence.

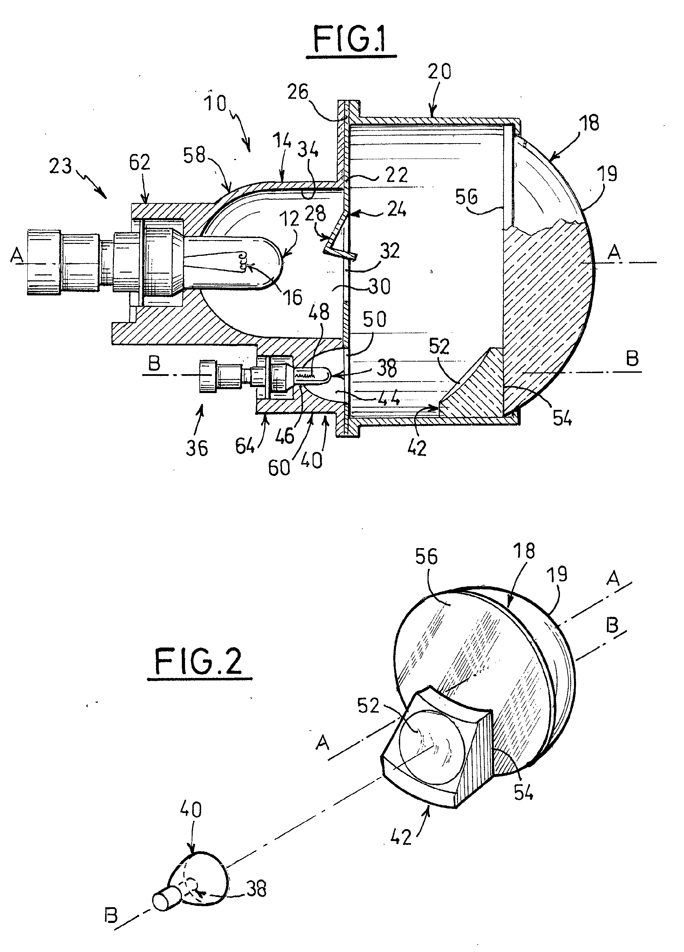

Sur la figure 1, on a représenté un projecteur 10 pour véhicule automobile qui est réalisé conformément aux enseignements de l'invention.

De manière classique, le projecteur 10 comporte une lampe principale 12 montée dans le fond d'un réflecteur principal 14 du type elliptique de telle sorte que le filament 16 de la lampe principale 12 se situe au voisinage d'un premier foyer du réflecteur principal 14.

Dans la suite de la description, on utilisera à titre non limitatif une orientation d'arrière en avant, suivant l'axe optique principal A-A du projecteur 10, qui correspond à une orientation de gauche à droite en considérant la figure 1. L'axe optique principal A-A est généralement parallèle à l'axe longitudinal du véhicule que le projecteur 10 équipe.

L'axe optique principal A-A est ici sensiblement horizontal et il peut être défini par exemple par les deux foyers du réflecteur principal 14.

On utilisera aussi, à titre non limitatif, une orientation de haut en bas suivant un axe vertical, en considérant la figure 1.

Le projecteur 10 comporte une lentille convergente 18 qui est montée, à l'avant, dans un élément d'ossature 20 du projecteur 10 fixé sur une surface transversale avant 22 du réflecteur principal 14.

Le plan focal de la lentille 18 passe au voisinage du second foyer du réflecteur principal 14.

La lampe principale 12, le réflecteur principal 14 et la lentille 18 forment ensemble un système optique principal 23 dont la surface de sortie 19 est la surface avant de la lentille 18.

Dans le mode de réalisation représenté ici, le système optique principal 23 est prévu pour réaliser une fonction de feu de route et il comporte à cet effet un dispositif d'occultation, ou cache 24, qui est intercalé axialement entre la surface transversale avant 22 du réflecteur principal 14 et la surface transversale arrière 26 de l'élément d'ossature 20. Le cache 24 est agencé sensiblement dans le plan focal de la lentille principale 18.

Le cache 24 est par exemple réalisé conformément aux enseignements contenus dans la demande de brevet français N°00.08903 déposée le 7 juillet 2000. Il a ici la forme d'une plaque métallique, orientée globalement transversalement par rapport à l'axe optique principal A-A, qui comporte une partie occultante 28 dans la moitié supérieure de l'ouverture de sortie 30 du réflecteur principal 14 et qui délimite une fenêtre 32 dans la moitié inférieure de l'ouverture de sortie 30 du réflecteur principal 14.

Le cache 24 vise ici à faire obstacle aux rayons lumineux émis par la lampe principale 12 vers la partie haute de la paroi réfléchissante 34 du réflecteur principal 14 en vue de diminuer l'intensité lumineuse émise par le projecteur 10 en feu de route dans une zone proche de l'avant du véhicule.

Conformément aux enseignements de l'invention, le projecteur 10 comporte un système optique secondaire 36 comprenant une lampe secondaire 38, un réflecteur secondaire 40, et un élément optique de répartition 42.

Le système optique secondaire 36 est prévu ici pour réaliser une prestation réglementaire du type feu de position. Il est donc nécessaire que la lampe secondaire 38 produise un faisceau lumineux en sortie de la lentille principale 18 qui s'étale dans toutes les directions à l'avant du véhicule, notamment sur les côtés, vers le bas et vers le haut, ainsi que dans l'axe du véhicule, comme le prévoit la réglementation.

Le système optique secondaire 36 définit ici un axe optique secondaire B-B qui est sensiblement parallèle à l'axe optique principal A-A et qui est agencé ici au-dessous de ce dernier.

Le réflecteur secondaire 40 est adjacent à la partie inférieure de la paroi réfléchissante 34 du réflecteur principal 14. Il a ici une forme globalement parabolique. Il comporte à l'avant une ouverture de sortie 44 et à l'arrière un trou 46 permettant le montage de la lampe secondaire 38, de sorte que son filament 48 soit agencé globalement au foyer de la parabole.

On note que le cache 24 comporte une fenêtre 50 en regard de l'ouverture de sortie 44 du réflecteur secondaire 40, de manière à laisser passer tous les rayons lumineux émis par la lampe secondaire 38.

Sur la figure 2, on a représenté schématiquement en perspective le réflecteur secondaire 40, la lampe secondaire 38, l'élément optique de répartition 42, ainsi que la surface d'entrée 56 de la lentille principale 18.

L'élément optique de répartition 42 est ici une pièce, par exemple en verre, formant une lentille secondaire convergente.

La lentille secondaire 42 comporte donc, à l'arrière, une surface d'entrée 52 de forme globalement hémisphérique concave, qui est inclinée vers l'avant et vers le bas, et à l'avant, une surface de sortie 54 plane qui est orientée transversalement par rapport à l'axe optique secondaire B-B.

Avantageusement, la surface de sortie 54 de la lentille secondaire est adjacente à une portion périphérique de la surface arrière d'entrée 56 de la lentille principale 18.

On note que, s'il n'y avait pas la lentille secondaire 42, comme le filament 48 de la lampe secondaire 38 n'est pas agencé au foyer de la lentille principale 18, la majorité de ses rayons lumineux serait dirigée suivant des directions sensiblement parallèles à l'axe optique secondaire B-B sur la portion périphérique en vis-à-vis de la surface d'entrée 56 de la lentille principale 18. La majorité de ces rayons lumineux serait alors déviée vers le haut à la sortie de la lentille principale 18, du fait de ses propriétés de convergence.

La lentille secondaire 42 permet donc de corriger l'angle d'incidence des rayons lumineux émis par la lampe secondaire 38 sur la surface d'entrée 56 de la lentille principale 18, de manière que ces rayons lumineux sortent de la lentille principale 18 en étant répartis dans toutes les directions à l'avant du projecteur 10, ce qui permet de réaliser le faisceau réglementaire de feu de position.

Pour réaliser la lentille secondaire 42, on utilise les propriétés classiques du domaine de l'optique. Il est par exemple possible de déterminer les caractéristiques optiques de la lentille secondaire 42 qui permettent d'obtenir, à la sortie de la lentille principale 18, des rayons lumineux semblant provenir du foyer de la lentille principale 18, c'est à dire qui permettent de placer l'image virtuelle du filament secondaire 48 au foyer de la lentille principale 18.

Avantageusement, la structure 58 du réflecteur secondaire 40 est réalisée par injection et moulage en une seule pièce avec la structure 60 du réflecteur principal 14.

On entend ici par structure 58, 60, le corps de chaque réflecteur 14, 40, ainsi que les moyens de support 62, 64 de chaque lampe 12, 38.

La structure 58, 60 des réflecteurs 14, 40 est par exemple réalisée par injection et moulage en métal, tel qu'un alliage de magnésium ou d'aluminium. Les surfaces réfléchissantes des réflecteurs 14, 40 sont par exemple réalisées par dépôt d'une couche d'aluminium ou d'alliage d'aluminium.

Comme les axes optiques principal A-A et secondaire B-B sont sensiblement parallèles, les deux lampes 12, 38 peuvent être montées dans leurs réflecteurs 14, 40 respectifs selon le même principe, c'est à dire axialement d'arrière en avant, à l'intérieur de trous correspondants. Ceci permet de faciliter les opérations de montage et de démontage des lampes 12, 38 dans le projecteur 10, notamment lors du changement des lampes 12, 38.

De préférence, le projecteur 10 selon l'invention est un projecteur de feu de route puisque le faisceau d'éclairage de celui-ci est moins exigeant en terme de photométrie, ce qui permet de ne pas tenir compte des altérations du faisceau d'éclairage issu de la lampe principale 12 dues à la présence de la lentille secondaire 42.

Cependant le projecteur 10 selon l'invention peut aussi être utilisé pour réaliser un feu de croisement, ou pour réaliser plusieurs fonctions différentes, dans le cas ou le projecteur 10 comporte par exemple plusieurs caches 24 mobiles qui sont associés à plusieurs fonctions d'éclairage différentes.

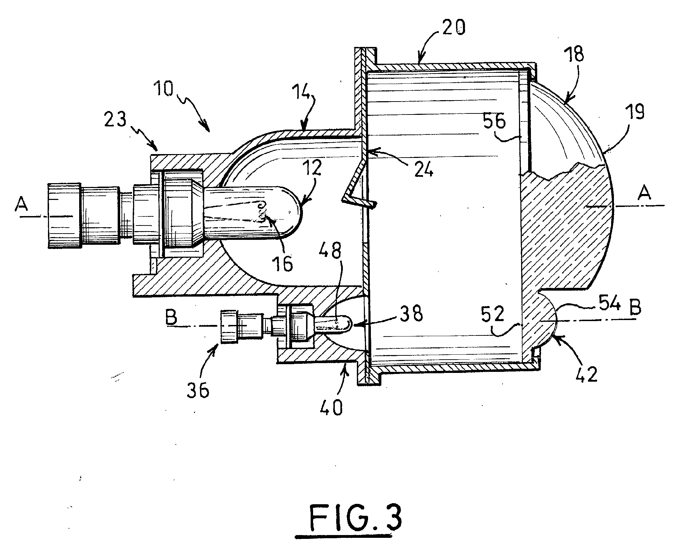

Selon une variante de réalisation qui est représentée sur la figure 3, la lentille secondaire 32 est réalisée directement dans la lentille principale 18.

Comme on peut le voir sur cette figure, une portion périphérique inférieure de la lentille principale 18 forme une lentille secondaire 42 qui est agencée axialement (B-B) en vis-à-vis de la lampe secondaire 38.

Avantageusement, la surface d'entrée 52 de la lentille secondaire 42 est plane et elle est située dans le même plan transversal que la surface d'entrée de la lentille principale 18.

La surface de sortie 54 de la lentille secondaire 42 est ici de forme sensiblement hémisphérique et convexe.

Selon ce mode de réalisation, le réflecteur secondaire 40 est de préférence du type elliptique et il comporte un premier foyer au voisinage de la source secondaire 48 et un deuxième foyer au voisinage du plan focal de la lentille secondaire 42.

La lentille principale 18 est actuellement réalisée par moulage. Par conséquent, pour intégrer la lentille secondaire 42 à la lentille principale 18 il suffit de modifier la forme du moule du côté de la surface de sortie.

Avantageusement, le projecteur 10 selon l'invention peut être utilisé dans le cadre d'un faisceau d'éclairage principal utilisant la lumière infrarouge. Le document FR-A-2.756.237 décrit un exemple de projecteur susceptible de produire un faisceau d'éclairage à lumière infrarouge.

En effet, dans ce type de projecteur, on cherche à éliminer les « fuites de rouge », c'est à dire les rayons lumineux de couleur rouge qui sortent du projecteur, malgré la présence d'un filtre prévu pour ne laisser passer que les rayons infrarouge.

Grâce à la lampe secondaire 38, qui partage sa surface de sortie 19 du projecteur 10 avec la surface de sortie 19 de la lampe principale 12, on peut noyer les rayons lumineux de couleur rouge issus de la lampe principale 12 avec les rayons lumineux de couleur sensiblement blanche issus de la lampe secondaire 38.

Bien entendu le projecteur 10 selon l'invention peut être utilisé dans tous les cas qui nécessitent un faisceau de signalisation, en particulier pour réaliser un faisceau d'éclairage réglementaire pour la circulation en journée, ou feu de jour.

Selon une variante de réalisation non représentée, l'élément optique de répartition 42 peut être un miroir ou un prisme de forme appropriée.

Dans les modes de réalisation décrits précédemment, on a utilisé un réflecteur secondaire 40 pour concentrer les rayons lumineux issus de la lampe secondaire 38 sur la surface d'entrée 52 de la lentille secondaire 42. Selon des variantes de réalisation (non représentées) de l'invention, on peut utiliser d'autres moyens de concentration des rayons lumineux, tels que par exemple des guides de lumière, des faisceaux de fibres optiques, des dispositifs de concentration à lentille de Fresnel (ou lentille à échelons), etc.

Comme dispositif de concentration à lentille de Fresnel on peut utiliser un dispositif tel qu'une « bonnette » qui est utilisée dans certains feux arrière de signalisation de véhicules pour concentrer les rayons lumineux émis par une lampe sans réflecteur suivant des directions parallèles.

La bonnette comporte généralement une portion tubulaire de fixation et une portion hémisphérique qui « enveloppe » le bulbe de la lampe associée et qui forme une lentille de Fresnel focalisée sur le filament de la lampe. La bonnette est généralement réalisée dans une matière plastique qui peut facilement être teintée, ce qui peut être avantageux dans le cas d'un faisceau d'éclairage principal utilisant la lumière infrarouge, en vue d'éliminer les « fuites de rouge » par addition de lumière légèrement colorée.

On note que, lorsque la lampe principale 12 est allumée, elle produit une quantité importante de chaleur qui est transmise par convection, pour une grande partie vers la partie haute du réflecteur principal 14. Or, pour des raison de coûts, les lampes 38 utilisées pour réaliser la source secondaire ont généralement des culots en plastique qui sont sensibles à la chaleur.

Par conséquent, on agence de préférence le réflecteur secondaire 40 et sa lampe 38 au-dessous ou à côté du réflecteur principal 14, de manière à diminuer l'échauffement de la lampe secondaire 38 lorsque la lampe principale 12 est allumée.

## Revendications

1. Projecteur d'éclairage (10) de véhicule automobile qui est prévu pour réaliser au moins un faisceau d'éclairage réglementaire, notamment du type feu de route ou du type feu de croisement, du type comportant un système optique principal (23) qui comprend, agencés d'arrière en avant globalement suivant un axe optique principal (A-A), une source lumineuse principale (16), un réflecteur principal (14) du type elliptique dont un premier foyer est situé au voisinage de la source (16), et une lentille principale convergente (18) dont un plan focal passe au voisinage d'un second foyer du réflecteur principal (14),
**caractérisé en ce qu'**il comporte un système optique secondaire (36) comprenant :
- une source lumineuse secondaire (48) qui est agencée à l'arrière de la lentille principale (18) et en dehors du trajet des rayons lumineux émis par la source lumineuse principale (16) ;
- et, un élément optique de répartition (42) qui est intercalé entre la source lumineuse secondaire (48) et la surface de sortie (19) de la lentille principale (18), qui reçoit les rayons lumineux émis par la source secondaire (48) sur sa surface d'entrée (52) et qui les répartit sur sa surface de sortie (54), de manière à réaliser à la sortie de la lentille principale (18) un faisceau réglementaire secondaire de signalisation, notamment du type feu de position ou du type feu de jour.

2. Projecteur (10) selon la revendication précédente, **caractérisé en ce que** la surface de sortie (54) de l'élément optique de répartition (42) est adjacente à une portion de la surface d'entrée (56) de la lentille principale (18).

3. Projecteur (10) selon la revendication 1, **caractérisé en ce que** l'élément optique de répartition (42) est formé dans une portion périphérique de la lentille principale (18).

4. Projecteur (10) selon l'une quelconque des revendications précédentes, **caractérisé en ce que** l'élément optique de répartition (42) est une lentille secondaire (42).

5. Projecteur (10) selon l'une quelconque des revendications précédentes, **caractérisé en ce que** la source lumineuse secondaire (48) et l'élément optique de répartition (42) sont globalement alignés suivant un axe optique secondaire (B-B) qui est sensiblement parallèle à l'axe optique principal (A-A).

6. Projecteur (10) selon l'une quelconque des revendications précédentes, **caractérisé en ce que** le système optique secondaire (36) comporte des moyens (40) prévus pour concentrer les rayons lumineux émis par la source secondaire (48) sur la surface d'entrée (52) de l'élément optique de répartition (42).

7. Projecteur (10) selon la revendication précédente, **caractérisé en ce que** la source lumineuse secondaire (48) est agencée à l'intérieur d'un réflecteur secondaire (40) de forme globalement parabolique ou elliptique.

8. Projecteur (10) selon la revendication précédente, **caractérisé en ce que** la structure (60) du réflecteur secondaire (40) est réalisée par moulage en une seule pièce avec la structure (58) du réflecteur principal (14).
